# EUROPEAN PATENT APPLICATION

(11) **EP 4 718 567 A1**
(43) Date of publication of application: **01.04.2026**
(21) Application number: 24831966.7
(22) Date of filing: 26.06.2024
(51) Int. Cl.: H01M 10/0569, H01M 10/0567, H01M 10/0568

(54) **NONAQUEOUS SOLVENT SOLUTION AND METHOD FOR PRODUCING NONAQUEOUS ELECTROLYTE SOLUTION**

(30) Priority: 28.06.2023 JP 2023106166
(71) Applicant: Central Glass Company, Limited, Ube-shi, Yamaguchi 755-0001 (JP)
(72) Inventor: KUBO, Kenji, Tokyo 101-0054 (JP); TAKAHASHI, Mikihiro, Tokyo 101-0054 (JP); MORINAKA, Takayoshi, Tokyo 101-0054 (JP)
(74) Representative: Manitz Finsterwald Patent- und Rechtsanwaltspartnerschaft mbB
(86) International application number: PCT/JP2024/023101
(87) International publication number: WO 2025/005106

(57) **Abstract**

A nonaqueous solvent solution containing a nonaqueous solvent, a difluorobis(oxalato)phosphate, and a tris(oxalato)phosphate in which a concentration of the difluorobis(oxalato)phosphate in the nonaqueous solvent solution is 10 to 50 mass% and in which a ratio of the difluorobis(oxalato)phosphate to the tris(oxalato)phosphate is such that, per 1 mol of the difluorobis(oxalato)phosphate, 0.001 mol or more of the tris(oxalato)phosphate is present, and a method for producing a nonaqueous electrolyte solution including adding a nonaqueous solvent solution to a base nonaqueous electrolyte solution containing a solute and a solvent for a nonaqueous electrolyte solution.

## Description

### TECHNICAL FIELD

The present disclosure relates to a nonaqueous solvent solution and a method for producing a nonaqueous electrolyte solution.

### BACKGROUND ART

Difluorobis(oxalato)phosphates are used in additives for nonaqueous electrolyte solution batteries and the like.

Example 7 of Patent Literature 1 discloses that a solution of a difluorobis(oxalato)phosphate can be used to prepare an electrolyte solution of any concentration.

Moreover, Example 8 of Patent Literature 2 describes an ethyl methyl carbonate solution containing 37 mass% of lithium difluorobis(oxalato)phosphate and 2 mass% of lithium tetrafluoro oxalato phosphate. Patent Literature 2 also discloses that a lithium difluorobis(oxalato)phosphate solution can be used as an effective additive for improving the performance of a nonaqueous electrolyte solution battery.

As described above, in the preparation of a nonaqueous electrolyte solution containing a difluorobis(oxalato)phosphate, addition of the difluorobis(oxalato)phosphate may be performed in a form of adding a nonaqueous solvent solution of the difluorobis(oxalato)phosphate having a predetermined concentration (hereinafter, sometimes referred to as "a concentrated liquid of a difluorobis(oxalato)phosphate" or simply "a concentrated liquid").

### CITATION LIST

### PATENT LITERATURE

Patent Literature 1: JP2014-005269A
Patent Literature 2: JP2010-143835A

### SUMMARY OF INVENTION

### TECHNICAL PROBLEM

However, studies by the present disclosers have revealed problems that a difluorobis(oxalato)phosphate is unstable in water and that, when water is mixed in a concentrated liquid of a difluorobis(oxalato)phosphate, the concentration of the difluorobis(oxalato)phosphate decreases.

An object of the present disclosure is to provide a concentrated liquid of a difluorobis(oxalato)phosphate which has excellent stability of the difluorobis(oxalato)phosphate even when water is mixed.

Another object of the present disclosure is to provide a method for producing a nonaqueous electrolyte solution using the concentrated liquid of the difluorobis(oxalato)phosphate.

### SOLUTION TO PROBLEM

As a result of intensive studies to solve such problems, the present disclosers have found that, by adding a specific amount or more of a tris(oxalato)phosphate, a concentrated liquid which has excellent stability of a difluorobis(oxalato)phosphate even when water is mixed can be provided. Specifically, the above problems can be solved by the following configuration.
[1] A nonaqueous solvent solution containing
   a nonaqueous solvent,
   a difluorobis(oxalato)phosphate, and
   a tris(oxalato)phosphate
   in which a concentration of the difluorobis(oxalato)phosphate in the nonaqueous solvent solution is 10 to 50 mass%, and
   a ratio of the difluorobis(oxalato)phosphate to the tris(oxalato)phosphate is such that, per 1 mol of the difluorobis(oxalato)phosphate, 0.001 mol or more of the tris(oxalato)phosphate is present.
[2] The nonaqueous solvent solution according to [1], further containing a tetrafluoro oxalato phosphate.
[3] The nonaqueous solvent solution according to [2], in which a ratio of the difluorobis(oxalato)phosphate to the tetrafluoro oxalato phosphate is such that, per 1 mol of the difluorobis(oxalato)phosphate, 0.010 to 0.25 mol of the tetrafluoro oxalato phosphate is present.
[4] The nonaqueous solvent solution according to any one of [1] to [3], further containing a difluorophosphate.
[5] The nonaqueous solvent solution according to [4], in which a ratio of the difluorobis(oxalato)phosphate to the difluorophosphate is such that, per 1 mol of the difluorobis(oxalato)phosphate, 0.001 to 0.05 mol of the difluorophosphate is present.
[6] The nonaqueous solvent solution according to [4], further containing a tetrafluoro oxalato phosphate
   in which a ratio of the difluorobis(oxalato)phosphate to the tetrafluoro oxalato phosphate to the difluorophosphate is such that, per 1 mol of the difluorobis(oxalato)phosphate, 0.010 to 0.25 mol of the tetrafluoro oxalato phosphate and 0.001 to 0.05 mol of the difluorophosphate are present.
[7] The nonaqueous solvent solution according to [1], in which the ratio of the difluorobis(oxalato)phosphate to the tris(oxalato)phosphate is such that, per 1 mol of the difluorobis(oxalato)phosphate, 0.03 mol or less of the tris(oxalato)phosphate is present.
[8] The nonaqueous solvent solution according to [1], in which the nonaqueous solvent contains at least one of a cyclic ester or a chain ester.
[9] The nonaqueous solvent solution according to [8], in which the chain ester content is 50 to 100 vol% with respect to the total amount of the nonaqueous solvent.
[10] The nonaqueous solvent solution according to [8],
   in which the cyclic ester is at least one selected from the group consisting of ethylene carbonate, propylene carbonate, butylene carbonate, fluoroethylene carbonate, and γ-butyrolactone, and
   the chain ester is at least one selected from the group consisting of dimethyl carbonate, diethyl carbonate, ethyl methyl carbonate, methyl acetate, ethyl acetate, methyl propionate, and ethyl propionate.
[11] A method for producing a nonaqueous electrolyte solution including adding the nonaqueous solvent solution according to any one of [1] to [10] to a base nonaqueous electrolyte solution containing a solute and a solvent for a nonaqueous electrolyte solution.
[12] The method for producing a nonaqueous electrolyte solution according to [11], in which the base nonaqueous electrolyte solution contains another additive.
[13] The method for producing a nonaqueous electrolyte solution according to [11], further including a step of adding another additive.
[14] A method for producing a nonaqueous electrolyte solution including mixing the nonaqueous solvent solution according to any one of [1] to [10], a solute, and a solvent for a nonaqueous electrolyte solution.
[15] The method for producing a nonaqueous electrolyte solution according to [14], further including a step of adding another additive.
[16] The method for producing a nonaqueous electrolyte solution according to [13], in which the other additive is at least one selected from the group consisting of a difluoro(oxalato)borate, a bis(oxalato)borate, a fluorosulfonate, a bis(trifluoromethanesulfonyl)imide salt, a bis(fluorosulfonyl)imide salt, a (trifluoromethanesulfonyl)(fluorosulfonyl)imide salt, a bis(difluorophosphoryl)imide salt, a (difluorophosphoryl)(fluorosulfonyl)imide salt, a (difluorophosphoryl)(trifluoromethanesulfonyl)imide salt, cyclohexylbenzene, t-butylbenzene, t-amylbenzene, fluorobenzene, vinylene carbonate, an oligomer of vinylene carbonate (a number average molecular weight is 170 to 5000), vinylethylene carbonate, fluoroethylene carbonate, 1,6-diisocyanatohexane, ethynylethylene carbonate, trans-difluoroethylene carbonate, 1,3-propane sultone, 1,3-propene sultone, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, adiponitrile, (ethoxy)pentafluorocyclotriphosphazene, methanesulfonyl fluoride, a tetrafluoro(picolinato)phosphate, and 1,3-dimethyl-1,3-divinyl-1,3-di(1,1,1,3,3,3-hexafluoroisopropyl) disiloxane.
[17] The method for producing a nonaqueous electrolyte solution according to [15], in which the other additive is at least one selected from the group consisting of a difluoro(oxalato)borate, a bis(oxalato)borate, a fluorosulfonate, a bis(trifluoromethanesulfonyl)imide salt, a bis(fluorosulfonyl)imide salt, a (trifluoromethanesulfonyl)(fluorosulfonyl)imide salt, a bis(difluorophosphoryl)imide salt, a (difluorophosphoryl)(fluorosulfonyl)imide salt, a (difluorophosphoryl)(trifluoromethanesulfonyl)imide salt, cyclohexylbenzene, t-butylbenzene, t-amylbenzene, fluorobenzene, vinylene carbonate, an oligomer of vinylene carbonate (a number average molecular weight is 170 to 5000), vinylethylene carbonate, fluoroethylene carbonate, 1,6-diisocyanatohexane, ethynylethylene carbonate, trans-difluoroethylene carbonate, 1,3-propane sultone, 1,3-propene sultone, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, adiponitrile, (ethoxy)pentafluorocyclotriphosphazene, methanesulfonyl fluoride, a tetrafluoro(picolinato)phosphate, and 1,3-dimethyl-1,3-divinyl-1,3-di(1,1,1,3,3,3-hexafluoroisopropyl) disiloxane.

### ADVANTAGEOUS EFFECTS OF INVENTION

According to the present disclosure, a concentrated liquid of a difluorobis(oxalato)phosphate which has excellent stability of the difluorobis(oxalato)phosphate even when water is mixed can be provided.

In addition, according to the present disclosure, a method for producing a nonaqueous electrolyte solution using the concentrated liquid of the difluorobis(oxalato)phosphate can be provided.

### DESCRIPTION OF EMBODIMENTS

The term "to" in the present specification is used with the meanings including the numerical values indicated before and after "to" as a lower limit value and an upper limit value.

Hereinafter, the present disclosure will be described in detail, but the description of the constituent elements described below is an example of an embodiment of the present disclosure, and the present disclosure is not limited to these specific contents.

### [Nonaqueous Solvent Solution]

The nonaqueous solvent solution of the present disclosure is
a nonaqueous solvent solution containing
a nonaqueous solvent,
a difluorobis(oxalato)phosphate, and
a tris(oxalato)phosphate
in which a concentration of the difluorobis(oxalato)phosphate in the nonaqueous solvent solution is 10 to 50 mass%, and
a ratio of the difluorobis(oxalato)phosphate to the tris(oxalato)phosphate is such that, per 1 mol of the difluorobis(oxalato)phosphate, 0.001 mol or more of the tris(oxalato)phosphate is present.

The nonaqueous solvent solution of the present disclosure has a difluorobis(oxalato)phosphate concentration of 10 to 50 mass% and is a concentrated liquid. The concentration of the difluorobis(oxalato)phosphate in the nonaqueous solvent solution of the present disclosure may be 15 to 40 mass%.

Examples of the difluorobis(oxalato)phosphate include lithium difluorobis(oxalato)phosphate and sodium difluorobis(oxalato)phosphate.

Examples of the tris(oxalato)phosphate include lithium tris(oxalato)phosphate and sodium tris(oxalato)phosphate.

The ratio of the difluorobis(oxalato)phosphate to the tris(oxalato)phosphate is such that, per 1 mol of the difluorobis(oxalato)phosphate, 0.001 mol or more of the tris(oxalato)phosphate is present, which may be 0.002 mol or more, 0.004 mol or more, or 0.005 mol or more. Moreover, per 1 mol of the difluorobis(oxalato)phosphate, the amount of the tris(oxalato)phosphate may be 0.30 mol or less, may be 0.15 mol or less, may be 0.07 mol or less, or may be 0.03 mol or less. When the amount of the tris(oxalato)phosphate is 0.03 mol or less per 1 mol of the difluorobis(oxalato)phosphate, gas generation in the battery hardly occurs when a nonaqueous electrolyte solution is prepared using the nonaqueous solvent solution and the nonaqueous electrolyte solution is used in a nonaqueous electrolyte solution battery.

The nonaqueous solvent solution of the present disclosure may further contain a tetrafluoro oxalato phosphate.

Examples of the tetrafluoro oxalato phosphate include lithium tetrafluoro oxalato phosphate and sodium tetrafluoro oxalato phosphate.

A ratio of the difluorobis(oxalato)phosphate to the tetrafluoro oxalato phosphate may be such that, per 1 mol of the difluorobis(oxalato)phosphate, 0.010 to 0.30 mol of the tetrafluoro oxalato phosphate is present, which may be 0.010 to 0.25 mol.

The nonaqueous solvent solution of the present disclosure may further contain a difluorophosphate.

Examples of the difluorophosphate include lithium difluorophosphate and sodium difluorophosphate.

A ratio of the difluorobis(oxalato)phosphate to the difluorophosphate may be such that, per 1 mol of the difluorobis(oxalato)phosphate, 0.001 to 0.05 mol of the difluorophosphate is present.

The nonaqueous solvent solution of the present disclosure may contain a tetrafluoro oxalato phosphate and a difluorophosphate, and a ratio of the difluorobis(oxalato)phosphate to the tetrafluoro oxalato phosphate to the difluorophosphate may be such that, per 1 mol of the difluorobis(oxalato)phosphate, 0.010 to 0.25 mol of the tetrafluoro oxalato phosphate and 0.001 to 0.05 mol of the difluorophosphate are present.

### (Nonaqueous Solvent)

The nonaqueous solvent contained in the nonaqueous solvent solution of the present disclosure is not particularly limited, and any nonaqueous organic solvent can be used. Specific examples of the nonaqueous organic solvent include: cyclic carbonates which are also cyclic esters, such as propylene carbonate (hereinafter, sometimes referred to as "PC"), ethylene carbonate (hereinafter, sometimes referred to as "EC"), and butylene carbonate; chain carbonates which are also chain esters, such as diethyl carbonate (hereinafter, sometimes referred to as "DEC"), dimethyl carbonate (hereinafter, sometimes referred to as "DMC"), and ethyl methyl carbonate (hereinafter, sometimes referred to as "EMC"); cyclic esters, such as γ-butyrolactone and γ-valerolactone; chain esters, such as methyl acetate, methyl propionate, and ethyl propionate (hereinafter, sometimes referred to as "EP"); cyclic ethers, such as tetrahydrofuran, 2-methyltetrahydrofuran, and dioxane; chain ethers, such as dimethoxyethane and diethyl ether; sulfone compounds, such as dimethyl sulfoxide and sulfolane; and sulfoxide compounds.

One type of nonaqueous organic solvent may be used alone, or two or more types of nonaqueous organic solvents may be mixed and used in any combination at any ratio according to the application. Of these, propylene carbonate, ethylene carbonate, diethyl carbonate, dimethyl carbonate, ethyl methyl carbonate, methyl propionate, and ethyl propionate are particularly preferable from the viewpoint of electrochemical stability against oxidation-reduction thereof, from the viewpoint of stability against heat, or from the viewpoint of chemical stability relating to the reaction with the difluorobis(oxalato)phosphate or the tris(oxalato)phosphate (and the tetrafluoro oxalato phosphate or the difluorophosphate which can be further contained).

Moreover, as the nonaqueous organic solvent, for example, a single type of solvent such as EMC may be used, or one or more types of cyclic carbonates having a high permittivity and one or more types of chain carbonates or chain esters having a low liquid viscosity may be used. Specifically, the following combinations may be used.
(1) A combination of EC and EMC,
(2) a combination of EC and DEC,
(3) a combination of EC, DMC, and EMC,
(4) a combination of EC, DEC, and EMC,
(5) a combination of EC, EMC, and EP,
(6) a combination of PC and DEC,
(7) a combination of PC and EMC,
(8) a combination of PC and EP,
(9) a combination of PC, DMC, and EMC,
(10) a combination of PC, DEC, and EMC,
(11) a combination of PC, DEC, and EP,
(12) a combination of PC, EC, and EMC,
(13) a combination of PC, EC, DMC, and EMC,
(14) a combination of PC, EC, DEC, and EMC, and
(15) a combination of PC, EC, EMC, and EP.

### [Method for Producing Nonaqueous Electrolyte Solution]

The method for producing a nonaqueous electrolyte solution of the present disclosure is a method for producing a nonaqueous electrolyte solution including adding the nonaqueous solvent solution of the present disclosure described above to a base nonaqueous electrolyte solution containing a solute and a solvent for a nonaqueous electrolyte solution.

### (Base Nonaqueous Electrolyte Solution)

The base nonaqueous electrolyte solution contains a solute and a solvent for a nonaqueous electrolyte solution.

The solute is an ionic salt composed of a pair of a cation and an anion, and is not particularly limited as long as the solute is present in an ionic state as a cation and an anion in a nonaqueous organic solvent, and various solutes which are ionic salts can be used. Specific examples of such a solute which is an ionic salt include alkali metal ions such as lithium ions and sodium ions, alkaline earth metal ions, and quaternary ammonium as cations, and hexafluorophosphoric acid, tetrafluoroboric acid, perchloric acid, hexafluoroarsenic acid, hexafluoroantimonic acid, and bis(fluorosulfonyl) imide as anions.

As the solute, which is an ionic salt, in the present disclosure, one type may be used alone, or two or more types may be mixed and used in any combination at any ratio according to the application. Of these, lithium, sodium, magnesium, quaternary ammonium, or the like is preferably used as the cation, and hexafluorophosphoric acid, tetrafluoroboric acid, bis(fluorosulfonyl) imide, or the like is preferably used as the anion, considering the energy density, the output characteristics, the life, and the like of the battery.

Specifically, the solute, which is an ionic salt, in the present disclosure may be at least one selected from the group consisting of a hexafluorophosphate and a tetrafluoroborate, or may be a combination of at least one selected from the group consisting of a hexafluorophosphate and a tetrafluoroborate and at least one selected from the group consisting of a perchlorate, a hexafluoroarsenate, a hexafluoroantimonate, and a bis(fluorosulfonyl)imide salt. The cation of the specific examples may be a lithium cation or a sodium cation.

The concentration of the solute, which is an ionic salt, in the nonaqueous electrolyte solution in the present disclosure (hereinafter, referred to as "solute concentration") is not particularly limited as long as the function as the solute, which is an ionic salt, can be sufficiently exhibited at the concentration, and for example, the lower limit is 0.5 mol/L or more, preferably 0.7 mol/L or more, and further preferably 0.9 mol/L or more, and the upper limit may be in the range of 5 mol/L or less, preferably 4 mol/L or less, and further preferably 2 mol/L or less. When the solute concentration is 0.5 mol/L or more, an ionic conductivity hardly decreases, and cycle characteristics and output characteristics of the nonaqueous electrolyte solution battery hardly deteriorate, which is preferable. On the other hand, when the solute concentration is 5 mol/L or less, a viscosity of the electrolyte solution for a nonaqueous electrolyte solution battery hardly increases, and the ionic conductivity hardly decreases, which is preferable. When two or more types of solutes which are ionic salts are used, a total concentration of these solutes is preferably in the above range.

When the solute, which is an ionic salt, is dissolved in the nonaqueous organic solvent, a liquid temperature is not particularly limited, and is, for example, preferably, from - 20 to 80°C, and more preferably from 0 to 60°C.

Examples of the solvent for a nonaqueous electrolyte solution contained in the base nonaqueous electrolyte solution include the same solvents as the nonaqueous solvents described above.

The base nonaqueous electrolyte solution contains the above components as basic constituent components, but as long as the gist of the present disclosure is not impaired, another additive which is generally used in this technical field may be added to the base nonaqueous electrolyte solution of the present disclosure at any ratio.

When the nonaqueous electrolyte solution of the present disclosure contains another additive, a content thereof may be 0.01 mass% or more and 10 mass% or less with respect to the total amount of the nonaqueous electrolyte solution.

Examples of the other additive include cyclohexylbenzene, cyclohexylfluorobenzene, biphenyl, 2-fluorobiphenyl, t-butylbenzene, t-amylbenzene, 2-fluorotoluene, fluorobenzene, vinylene carbonate (hereinafter, sometimes referred to as "VC"), an oligomer of vinylene carbonate (number average molecular weight in terms of polystyrene is 170 to 5000), vinylethylene carbonate, difluoroanisole, fluoroethylene carbonate (hereinafter, sometimes referred to as "FEC"), 1,6-diisocyanatohexane, ethynylethylene carbonate, trans-difluoroethylene carbonate, methyl propargyl carbonate, ethyl propargyl carbonate, dipropargyl carbonate, maleic anhydride, succinic anhydride, 1,3-propane sultone, 1,3-propene sultone, butane sultone, dimethylvinylene carbonate, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, phenyl difluorophosphate, 1,2-ethanedisulfonic anhydride, trivinylmethylsilane, trivinylfluorosilane, tetravinylsilane, tris(trimethylsilyl)borate, succinonitrile, (ethoxy)pentafluorocyclotriphosphazene, tetrafluoro(picolinato)phosphate, difluoro(picolinato)borate, 1,3-dimethyl-1,3-divinyl-1,3-di(1,1,1,3,3,3-hexafluoroisopropyl)disiloxane, lithium fluorosulfate, sodium fluorosulfate, lithium trifluoromethanesulfonate, sodium trifluoromethanesulfonate, lithium nonafluorobutanesulfonate, sodium nonafluorobutanesulfonate, lithium difluorooxalatoborate, sodium difluorooxalatoborate, lithium bis(oxalato)borate, sodium bis(oxalato)borate, lithium tetrafluoro oxalato phosphate, sodium tetrafluoro oxalato phosphate, lithium difluoro(malonato)borate, sodium difluoro(malonato)borate, lithium tetrafluoro(malonato)phosphate, sodium tetrafluoro(malonato)phosphate, lithium monofluorophosphate, sodium monofluorophosphate, lithium bis(difluorophosphoryl)imide, sodium bis(difluorophosphoryl)imide, lithium (difluorophosphoryl)(fluorosulfonyl)imide, sodium (difluorophosphoryl)(fluorosulfonyl)imide, lithium bis(trifluoromethanesulfonyl)imide, sodium bis(trifluoromethanesulfonyl)imide, lithium bis(pentafluoroethanesulfonyl)imide, sodium bis(pentafluoroethanesulfonyl)imide, lithium (trifluoromethanesulfonyl)(pentafluoroethanesulfonyl)imide, sodium (trifluoromethanesulfonyl)(pentafluoroethanesulfonyl)imide, lithium (trifluoromethanesulfonyl)(fluorosulfonyl)imide, sodium (trifluoromethanesulfonyl)(fluorosulfonyl)imide, lithium (pentafluoroethanesulfonyl)(fluorosulfonyl)imide, sodium (pentafluoroethanesulfonyl)(fluorosulfonyl)imide, lithium tris(trifluoromethanesulfonyl)methide, sodium tris(trifluoromethanesulfonyl)methide, carboxylate salts such as lithium acrylate, sodium acrylate, lithium methacrylate, and sodium methacrylate, and sulfate ester salts such as lithium methyl sulfate, sodium methyl sulfate, lithium ethyl sulfate, and sodium ethyl sulfate.

Here, a content of LiN(CF₃SO₂)₂, LiN(POF₂)₂, LiCF₃SO₃, LiC₄F₉SO₃, NaN(CF₃SO₂)₂, NaN(POF₂)₂, NaCF₃SO₃, or NaC₄F₉SO₃ with respect to the total amount of the nonaqueous electrolyte solution may be 0.01 mass% or more and 20 mass% or less.

In addition, as in the case of being used in a nonaqueous electrolyte solution battery referred to as a lithium polymer battery, the electrolyte solution for a nonaqueous electrolyte solution battery can be quasi-solidified with a gelling agent or a cross-linked polymer before use.

The method for producing a nonaqueous electrolyte solution of the present disclosure may further have a step of adding another additive.

In the method for producing a nonaqueous electrolyte solution of the present disclosure, a nonaqueous solvent solution, a solute, and a solvent for a nonaqueous electrolyte solution may be mixed. The solute and the solvent for a nonaqueous electrolyte solution in this case may be the same as the solute and the solvent for a nonaqueous electrolyte solution contained in the base nonaqueous electrolyte solution. Further, a step of adding another additive may be included.

### EXAMPLES

Hereinafter, the present disclosure will be specifically explained with Examples, but the present disclosure is not limited by these Examples.

### [Examples 1 to 8 and Comparative Examples 1 to 4]

### <Preparation of Concentrated Lithium Difluorobis(oxalato)phosphate Liquid>

Ethyl methyl carbonate (EMC) having a moisture content of 10 ppm by mass or less and lithium difluorobis(oxalato)phosphate were dissolved in a fluororesin container (PFA container manufactured by FLON INDUSTRY) to obtain a solution having a concentration of 25.1 mass%. In this solution, lithium tris(oxalato)phosphate, lithium tetrafluoro oxalato phosphate, and lithium difluorophosphate were dissolved in the molar ratios shown in Table 1 (the numbers of moles of the respective compounds per 1 mol of the difluorobis(oxalato)phosphate). To this solution, water in an amount that resulted in a water concentration of 700 ppm by mass on calculation was added, and the mixture was kept at 25°C for two weeks. Thereafter, the concentration of lithium difluorobis(oxalato)phosphate in the solution was quantified by ¹⁹F-NMR.

The results are shown in Table 1.

In Table 1, LiDFBOP represents lithium difluorobis(oxalato)phosphate, LiP(Ox)3 represents lithium tris(oxalato)phosphate, LiTFOP represents lithium tetrafluoro oxalato phosphate, and LiPO2F2 represents lithium difluorophosphate.

**[Table 1]**

| | Concentrated Liquid No. | Nonaqueous Solvent | LiDFBOP | | LiP(Ox)3 | LiTFOP | LiPO2F2 | Remaining LiDFBOP Concentration [mass%] after Addition of Water |
|---|---|---|---|---|---|---|---|---|
| | | | Concentration [mass%] | Molar Ratio | Molar Ratio | Molar Ratio | Molar Ratio | |
| Comparative Example 1 | 1 | | | | 0.000 | 0.000 | 0.000 | 23.9 |
| Comparative Example 2 | 2 | | | | 4.0×10⁻⁴ | 0.000 | 0.000 | 24.0 |
| Example 1 | 3 | | | | 3.0x 10⁻³ | 0.000 | 0.000 | 24.6 |
| Example 2 | 4 | | | | 0.010 | 0.000 | 0.000 | 25.0 |
| Example 3 | 5 | | | | 0.025 | 0.000 | 0.000 | 25.1 |
| Example 4 | 6 | EMC | 25.1 | 1.00 | 0.050 | 0.000 | 0.000 | 25.1 |
| Example 5 | 7 | | | | 0.100 | 0.000 | 0.000 | 25.1 |
| Comparative Example 3 | 8 | | | | 0.000 | 0.150 | 0.000 | 24.0 |
| Example 6 | 9 | | | | 0.010 | 0.150 | 0.000 | 25.1 |
| Comparative Example 4 | 10 | | | | 0.000 | 0.000 | 0.015 | 23.9 |
| Example 7 | 11 | | | | 0.010 | 0.000 | 0.015 | 25.0 |
| Example 8 | 12 | | | | 0.010 | 0.150 | 0.015 | 25.1 |

From the results in Table 1, it can be seen that the decomposition of lithium difluorobis(oxalato)phosphate by water was suppressed when a certain amount or more of lithium tris(oxalato)phosphate was added.

### INDUSTRIAL APPLICABILITY

According to the present disclosure, a concentrated liquid of a difluorobis(oxalato)phosphate which has excellent stability of the difluorobis(oxalato)phosphate even when water is mixed can be provided.

In addition, according to the present disclosure, a method for producing a nonaqueous electrolyte solution using the concentrated liquid of the difluorobis(oxalato)phosphate can be provided.

Although the present disclosure has been explained in detail and referring to specific embodiments, it will be apparent to a person skilled in the art that various changes and modifications can be made without departing from the spirit and the scope of the present disclosure.

The present application is based on a Japanese Patent Application (No. 2023-106166) filed on June 28, 2023, the contents of which are incorporated herein by reference.

## Claims

1. A nonaqueous solvent solution comprising
a nonaqueous solvent,
a difluorobis(oxalato)phosphate, and
a tris(oxalato)phosphate,
wherein a concentration of the difluorobis(oxalato)phosphate in the nonaqueous solvent solution is 10 to 50 mass%, and
a ratio of the difluorobis(oxalato)phosphate to the tris(oxalato)phosphate is such that, per 1 mol of the difluorobis(oxalato)phosphate, 0.001 mol or more of the tris(oxalato)phosphate is present.

2. The nonaqueous solvent solution according to claim 1, further comprising a tetrafluoro oxalato phosphate.

3. The nonaqueous solvent solution according to claim 2, wherein a ratio of the difluorobis(oxalato)phosphate to the tetrafluoro oxalato phosphate is such that, per 1 mol of the difluorobis(oxalato)phosphate, 0.010 to 0.25 mol of the tetrafluoro oxalato phosphate is present.

4. The nonaqueous solvent solution according to claim 1, further comprising a difluorophosphate.

5. The nonaqueous solvent solution according to claim 4, wherein a ratio of the difluorobis(oxalato)phosphate to the difluorophosphate is such that, per 1 mol of the difluorobis(oxalato)phosphate, 0.001 to 0.05 mol of the difluorophosphate is present.

6. The nonaqueous solvent solution according to claim 4, further comprising a tetrafluoro oxalato phosphate,
wherein a ratio of the difluorobis(oxalato)phosphate to the tetrafluoro oxalato phosphate to the difluorophosphate is such that, per 1 mol of the difluorobis(oxalato)phosphate, 0.010 to 0.25 mol of the tetrafluoro oxalato phosphate and 0.001 to 0.05 mol of the difluorophosphate are present.

7. The nonaqueous solvent solution according to claim 1, wherein the ratio of the difluorobis(oxalato)phosphate to the tris(oxalato)phosphate is such that, per 1 mol of the difluorobis(oxalato)phosphate, 0.03 mol or less of the tris(oxalato)phosphate is present.

8. The nonaqueous solvent solution according to claim 1, wherein the nonaqueous solvent contains at least one of a cyclic ester or a chain ester.

9. The nonaqueous solvent solution according to claim 8, wherein a content of the chain ester is 50 to 100 vol% with respect to a total amount of the nonaqueous solvent.

10. The nonaqueous solvent solution according to claim 8,
wherein the cyclic ester is at least one selected from the group consisting of ethylene carbonate, propylene carbonate, butylene carbonate, fluoroethylene carbonate, and γ-butyrolactone, and
the chain ester is at least one selected from the group consisting of dimethyl carbonate, diethyl carbonate, ethyl methyl carbonate, methyl acetate, ethyl acetate, methyl propionate, and ethyl propionate.

11. A method for producing a nonaqueous electrolyte solution, comprising adding the nonaqueous solvent solution according to any one of claims 1 to 10 to a base nonaqueous electrolyte solution containing a solute and a solvent for a nonaqueous electrolyte solution.

12. The method for producing a nonaqueous electrolyte solution according to claim 11, wherein the base nonaqueous electrolyte solution contains another additive.

13. The method for producing a nonaqueous electrolyte solution according to claim 11, further comprising a step of adding another additive.

14. A method for producing a nonaqueous electrolyte solution, comprising mixing the nonaqueous solvent solution according to any one of claims 1 to 10, a solute, and a solvent for a nonaqueous electrolyte solution.

15. The method for producing a nonaqueous electrolyte solution according to claim 14, further comprising a step of adding another additive.

16. The method for producing a nonaqueous electrolyte solution according to claim 13, wherein the other additive is at least one selected from the group consisting of a difluoro(oxalato)borate, a bis(oxalato)borate, a fluorosulfonate, a bis(trifluoromethanesulfonyl)imide salt, a bis(fluorosulfonyl)imide salt, a (trifluoromethanesulfonyl)(fluorosulfonyl)imide salt, a bis(difluorophosphoryl)imide salt, a (difluorophosphoryl)(fluorosulfonyl)imide salt, a (difluorophosphoryl)(trifluoromethanesulfonyl)imide salt, cyclohexylbenzene, t-butylbenzene, t-amylbenzene, fluorobenzene, vinylene carbonate, an oligomer of vinylene carbonate (a number average molecular weight is 170 to 5000), vinylethylene carbonate, fluoroethylene carbonate, 1,6-diisocyanatohexane, ethynylethylene carbonate, trans-difluoroethylene carbonate, 1,3-propane sultone, 1,3-propene sultone, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, adiponitrile, (ethoxy)pentafluorocyclotriphosphazene, methanesulfonyl fluoride, a tetrafluoro(picolinato)phosphate, and 1,3-dimethyl-1,3-divinyl-1,3-di(1,1,1,3,3,3-hexafluoroisopropyl) disiloxane.

17. The method for producing a nonaqueous electrolyte solution according to claim 15, wherein the other additive is at least one selected from the group consisting of a difluoro(oxalato)borate, a bis(oxalato)borate, a fluorosulfonate, a bis(trifluoromethanesulfonyl)imide salt, a bis(fluorosulfonyl)imide salt, a (trifluoromethanesulfonyl)(fluorosulfonyl)imide salt, a bis(difluorophosphoryl)imide salt, a (difluorophosphoryl)(fluorosulfonyl)imide salt, a (difluorophosphoryl)(trifluoromethanesulfonyl)imide salt, cyclohexylbenzene, t-butylbenzene, t-amylbenzene, fluorobenzene, vinylene carbonate, an oligomer of vinylene carbonate (a number average molecular weight is 170 to 5000), vinylethylene carbonate, fluoroethylene carbonate, 1,6-diisocyanatohexane, ethynylethylene carbonate, trans-difluoroethylene carbonate, 1,3-propane sultone, 1,3-propene sultone, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, adiponitrile, (ethoxy)pentafluorocyclotriphosphazene, methanesulfonyl fluoride, a tetrafluoro(picolinato)phosphate, and 1,3-dimethyl-1,3-divinyl-1,3-di(1,1,1,3,3,3-hexafluoroisopropyl) disiloxane.
